# EUROPEAN PATENT SPECIFICATION

(11) **EP 0 828 369 B1**
(45) Date of publication and mention of the grant of the patent: **26.03.2003**
(21) Application number: 97115055.2
(22) Date of filing: 30.08.1997
(51) Int. Cl.: H04N 1/00

(54) **Apparatus for displaying images exposed on a photographic film**
Vorrichtung zum Anzeigen von Bildern auf einem fotographischen Film
Dispositif d'affichage d'images exposées sur un Film photographique

(30) Priority: 04.09.1996 DE 19635863
(43) Date of publication of application: 11.03.1998
(73) Proprietor: EASTMAN KODAK COMPANY, Rochester, New York 14650-2201 (US); KODAK AKTIENGESELLSCHAFT, D-70323 Stuttgart (DE)
(72) Inventor: Reibl, Michael, 70323 Stuttgart (DE); Rieger, Albert, 70323 Stuttgart (DE)
(74) Representative: Haile, Helen Cynthia

(56) References cited:
- EP-A- 0 393 509
- EP-A- 0 698 993
- EP-A- 0 712 031
- US-A- 5 309 242
- PATENT ABSTRACTS OF JAPAN vol. 096, no. 007, 31 July 1996 & JP 08 062601 A (TOCHIGI NIKON:KK;NIKON CORP), 8 March 1996,

## Description

The invention relates to an apparatus for displaying images located on an exposed photographic film on a viewing unit, the apparatus comprising: a keypad for operating the apparatus and selecting the functions stored in the apparatus, a receiving means for a film cassette in which the exposed film containing the images is wound, a transport means for moving the film from the film cassette to a takeup cylinder, an illumination unit, a deflection mirror and an optical lens for forming an image on a CCD sensor, as well as circuit means for controlling the operation of the apparatus, and storage means for storing scanned CCD sensor images or for storing user inputs via the keypad.

EP-A-0 698 993 describes an image reading apparatus and method in which a film strip with magnetic and/or image data is scanned. The film is transported by means of a motor out of a film cartridge inserted into the apparatus and thereby moved past an illumination device, thus exposing a one-dimensional CCD sensor provided in the apparatus. In addition, an extensive electronics system is provided which controls the apparatus. All of the images present on the film strip are scanned at low resolution in a first pass, and are all displayed together on a screen. The user selects a specific image that is to be processed. This image is then scanned at a higher resolution and displayed on the screen.

A further apparatus for reproducing images that are recorded on a film strip is disclosed in EP-A-0 669 753. A film cartridge containing the film strip can be introduced via a drawer into the interior of the apparatus. The apparatus is connected to a TV monitor on which the images are displayed. The film strip is transported out of the film cartridge and moved past an illumination station. The images on the film strip are imaged onto a linear CCD sensor, in front of which three color filters (R, G, and B) are arranged. The scanned-in images can be displayed severally on the screen. This apparatus is suitably solely for displaying and assembling "slide shows." A portable apparatus, and the possibility to prepare repeat orders, are not at issue here.

EP-A-0 712 031 describes an apparatus and a method for displaying images exposed on a film. Magnetic tracks for audio recording and/or audio reproduction are also provided on the film. In one embodiment, the film strip is moved past an illumination unit with an imaging optical system; the film strip (exposed image) is thereby imaged onto a CCD image sensor. The images are displayed on a display, specifically in the same sequence in which they were previously recorded on one of the magnetic tracks.

It is the object of the invention to create an apparatus with which, in simple fashion, the images present on a photographic film can be viewed and repeat orders can be prepared. In addition, the apparatus is to be easy to operate, and no complex setup is required in order to view the images.

According to the invention, this object is attained in that the apparatus is configured, together with the viewing unit, upon which the scanned images are displayed, as a movable, portable apparatus that is independent of an external energy supply; and that the viewing unit is a color LCD display which is integrated into the apparatus and can be pivoted about a bearing from an operating position into an inactive position.

One advantage of the apparatus according to the invention is that it can be used quickly and easily at any desired location, with no need for complex setup operations. Moreover, the apparatus is of particularly compact and handy construction. The housing part and cover part form a cavity in which all the functional elements of the apparatus are housed. The functional elements include the inserted film cassette, the transport means, the illumination device, the takeup cylinder, the control and storage unit, the CCD sensor, the imaging optical system, the deflection mirror, the magnetic write/erase head, and the battery unit constituting the energy source. The battery unit makes the apparatus independent of an external energy source. The apparatus further comprises a color LCD display that is joined pivotedly to the cover part. As a result, images present on an exposed film can be viewed quickly and without great expenditure of time. A keypad allows the user to make inputs which concern repeat orders or format changes (custom cropping). These data are stored on a magnetic track of the film for later use at a photofinisher. In addition, customized image sequences can be assembled and later viewed on the color LCD display. It is particularly advantageous that the color LCD display can be pivoted from an operating position into an inactive position, thus protecting the color LCD display from damage and minimizing the external dimensions of the apparatus.

The subject matter of the invention will be explained in more detail with reference to the description below in conjunction with the drawings, in which
- Fig. 1: shows a longitudinal section through the apparatus, functional elements of the internal construction of the apparatus being visible;
- Fig. 2: shows a plan view of the apparatus, the cover part having been removed;
- Fig. 3: shows a section through the narrow side of the apparatus along line A-A of Fig. 2;
- Fig. 4: shows a schematic perspective depiction of the film guidance system of the apparatus;
- Fig. 5: shows a further embodiment of the apparatus, similar to the depiction in Fig. 3; and
- Fig. 6: shows a plan view of the keyboard used to operate the apparatus.

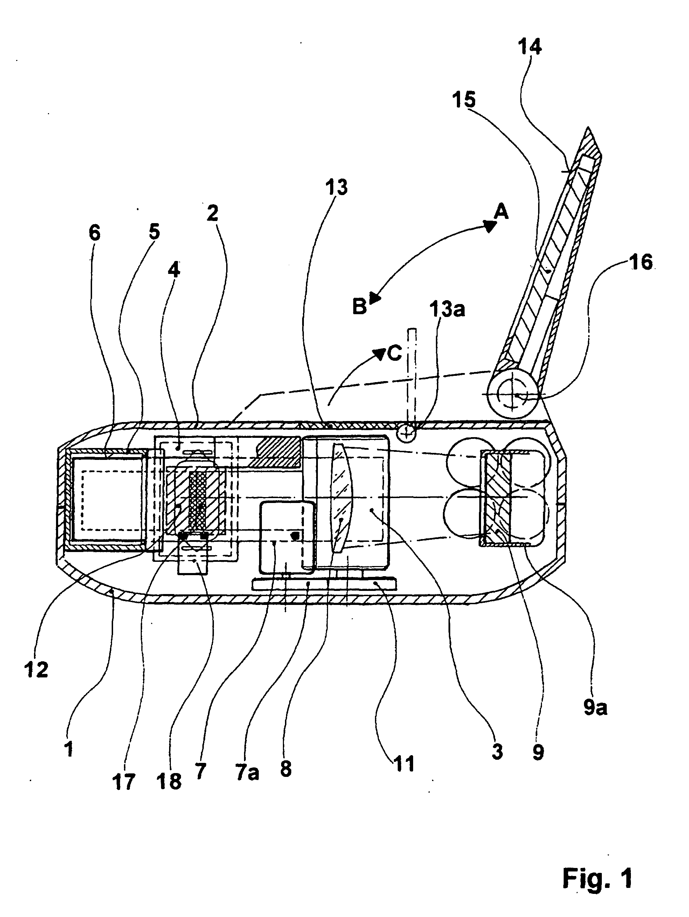

From the longitudinal section in Fig. 1, it is apparent that the apparatus consists of a housing shell 1 and a cover part 2 joined to it. Housing part 1 and cover part 2 enclose the functional elements of the apparatus. Provided inside the cavity formed by housing part 1 and cover part 2 is a receiving region for a film cassette 3, in which a film 6 is wound in the form of a film spool. A takeup cylinder 5 for receiving film 6 delivered out of film cassette 3 is provided opposite film cassette 3. An illumination unit 4 is provided in the region between film cassette 3 and takeup cylinder 5. Film 6 is transported from film cassette 3 to takeup cylinder 5 by means of a motor 7 which drives, via a drive pinion 7a, a transport gear 11 that is in engagement with the inserted film cassette.

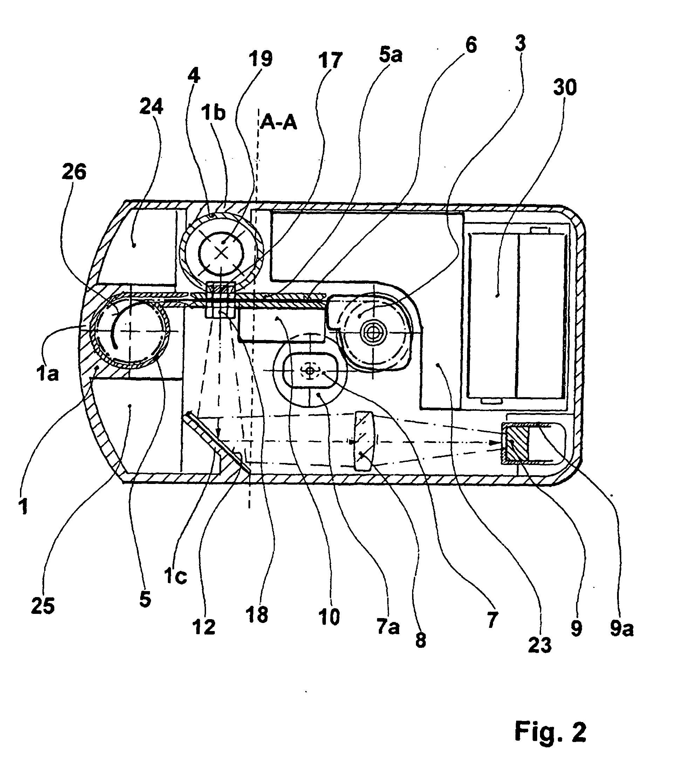

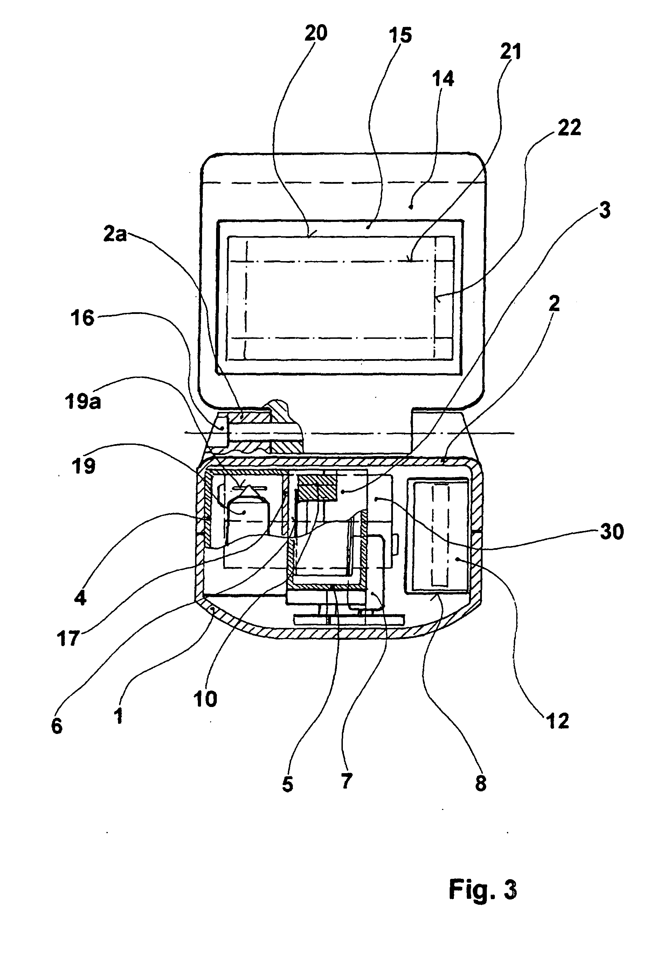

A forked light barrier 18, which serves to detect the beginning of an image on film 6, is provided in the region of illumination unit 4. Installed in illumination unit 4 is a lamp 19 (Fig. 2) which illuminates the film via a narrow light slit in front of which a diffusion panel 17 is arranged. The light passing through film 6 that is transported past the light slit is directed via a deflection mirror 12 (Fig. 3) onto an optical lens 8. Optical lens 8 forms the image of the light slit onto a CCD sensor 9, which converts the image data into corresponding digital data. CCD sensor 9 itself is mounted on a support 9a. The digital data are converted into video signals and displayed on a color LCD display 15.

Color LCD display 15 is housed in an LCD housing 14 that is connected to cover part 2 so as to pivot by means of a bearing 16. Color LCD display 15 is pivoted into the operating position in the direction of arrow A. Color LCD display 15 can be pivoted back into the inactive position in the direction of arrow B. In the inactive position, color LCD display 15 rests flat on top of cover part 2 (see dashed outline in Fig. 1).

Provided in cover part 2, directly over film cassette 3, is a cover 13 which can pivot about a bearing 13a and in its open position (see dash-dotted line in Fig. 1) allows film cassette 3 to be inserted and/or removed. Cover 13 can be pivoted into the open position in the direction of arrow C.

In the depiction from Fig. 2, cover part 2 has been removed and it is possible to look at the arrangement of the various components inside the apparatus enclosed by housing part 1 and cover part 2. Housing part 1 is configured internally in such a way that holding or support means for the various components are integrally formed with the housing part. Film cassette 3 is arranged approximately centrally on housing part 1. Directly adjoining film cassette 3 is a film guide 5a which guides the film during transport from the film cassette 3 to the takeup cylinder 5. A guide panel 26, which forces film 6 into a spiral position in takeup cylinder 5, is provided in the takeup cylinder 5. Takeup cylinder 5 is retained in a semicircular protrusion 1a of housing part 1. Provided above and below takeup cylinder 5 are first and second electronics units 24 and 25, respectively, which control and regulate the apparatus. Illumination unit 4, which is also mounted on a semicircular recess 1b of housing part 1, is arranged next to first electronics unit 24. Lamp 19 is mounted in the center of illumination unit 4. In illumination unit 4, the opening configured as a light slit is closed off by diffusion panel 17. Film 6 is illuminated through the light slit.

When the apparatus operates, film 6 is transported out of film cassette 3 by motor 7. The starting position of film 6 is reached when the forked light barrier 18, provided opposite diffusion panel 17, detects the perforation present in film 6. This and all further film transport steps are controlled via the forked light barrier 18.

During the scanning process, film 6 moves continuously past illumination unit 4. The light emerging from lamp 19 strikes film 6 as a narrow strip of light. From film 6, the light rays (ray path inside housing part 1 depicted with dash-dotted lines) arrive at deflection mirror 12 which is also mounted on a protrusion 1c of housing part 1. From deflection mirror 12, the light rays pass to lens 8, by which they are imaged onto CCD sensor 9. CCD sensor 9 is mounted on a support 9a. Provided above CCD sensor 9 is a battery unit 30 that acts as energy source for the apparatus. A connection (not depicted) for an external power supply is, of course, also present. Arranged next to battery unit 30 is an image memory 23 which stores the images read in by the apparatus and/or the entries made by the user.

Fig. 3 shows a section along line A-A in Fig. 2. Here portions of the apparatus are cut away to provide a better view. Color LCD display 15, together with housing 14, is in the folded-up position. Color LCD display 15 is thus ready to function for the display of scanned images. A support 2a is moulded on cover part 2, said support receiving bearing 16 so that color LCD display 15 can be pivoted correspondingly from the inactive position into the operating position and back again. Three formats can be displayed on color LCD display 15. A TV format 20 is represented in Fig. 3 by the solid line. A panoramic format 21 is defined by the horizontal dash-dotted lines and the vertical boundary of TV format 20. A standard format 22 is defined by the vertical dash-dotted lines and the horizontal boundary of TV format 20. The various functional elements of the apparatus are arranged in the cavity formed by housing part 1 and cover part 2, as already mentioned in Figs. 1 and 2.

In the depiction in Fig. 3, illumination unit 4, in which lamp 19 is supported by a clamp 19a which simultaneously serves to supply current, is provided in the left part of the cavity. Illumination unit 4 is closed off by a diffusion panel 17. Film 6 is guided immediately in front of diffusion panel 17. The edge of film 6 runs past a magnetic write/erase head 10, where data defined by the user can be written onto film 6. These data can comprise, for example, the number of repeat orders, audio sequences, format changes, etc. In the case of a subsequent format change, the format in which the image taken by the camera exists, is immaterial.

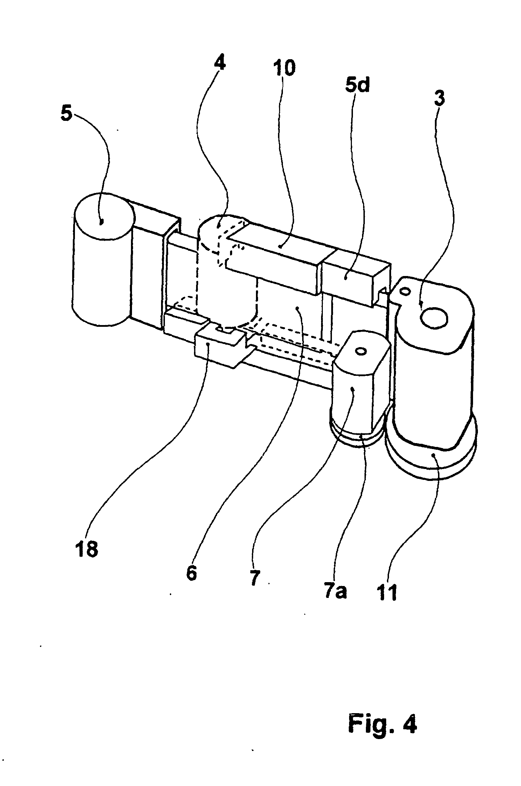

A detailed view of the film guidance system is depicted in Fig. 4. When inserted into the apparatus, film cassette 3 is actively linked with transport gear 11. Drive gear 7a, which in turn can be driven by motor 7, is in engagement with transport gear 11. A guide element 5d for film 6 is provided directly after the output slit of film cassette 3. Adjoining guide element 5d is magnetic write/erase head 10.

Illumination unit 4 (shown with dashed lines) is provided after magnetic write/erase head 10 in the transport direction of film 6. Also mounted in the region of illumination unit 4 is the forked light barrier 18, which detects the perforation in film 6 so as thereby to determine accurately the beginning of an image on film 6. Film 6 unwound from film cassette 3 is pushed by the drive force of motor 7 into takeup cylinder 5, and stored there until it is pulled back into film cassette 3.

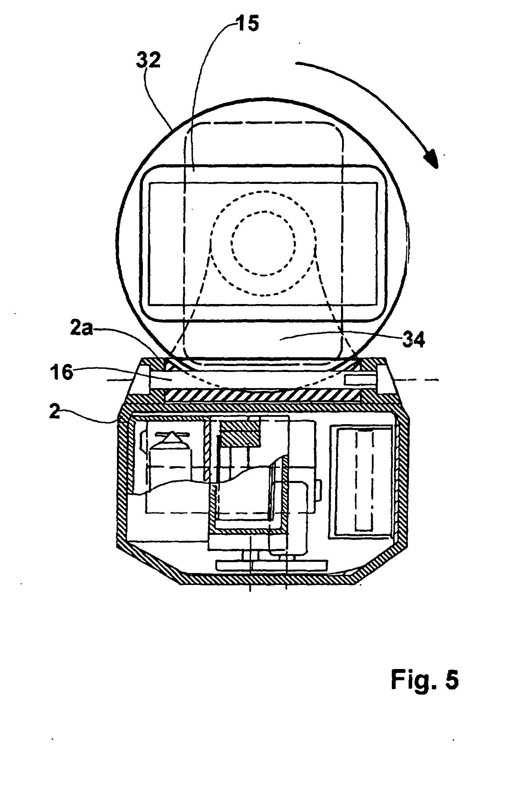

A further embodiment of the invention is depicted in Fig. 5. Here color LCD display 15 is built into a circular LCD housing 32. LCD housing 32 is rotatably mounted on a pivot arm 34; it is thus possible to change from the oblong format display to the upright format display by rotating LCD housing 32 through 90 degrees. Pivot arm 34 is in turn mounted, so as to pivot about bearing 16, in the support moulded on cover part 2.

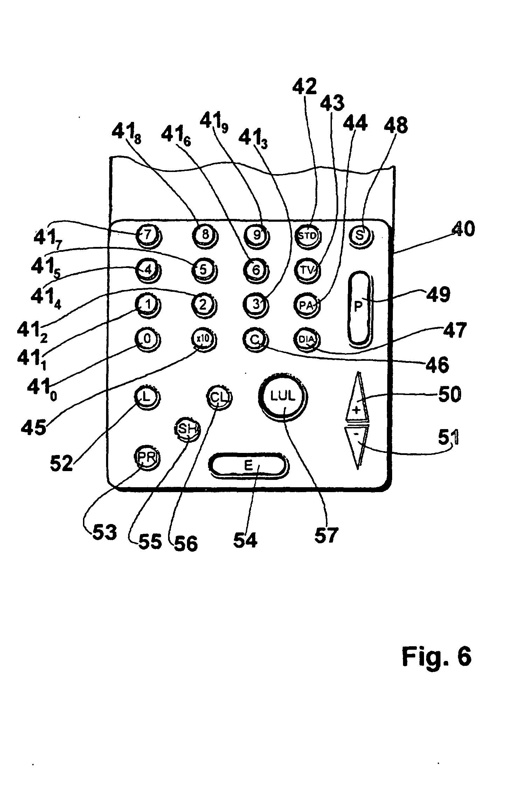

The portable apparatus is operated by means of a keyboard 40 depicted in Fig. 6. The keyboard is housed in cover part 2 of the apparatus. Numerical keys 41₀, 41₁, 41₂, ..., 41₉ are provided in order to enter the number of prints of a selected image on the film strip. Configured next to numerical key 41₉ for "nine" is a "standard format" key 42 which displays a selected image on color LCD display 15 in standard format 22. Configured next to numerical key 41₆ for "six" is a "television format" key 43, which displays a selected image on color LCD display 15 in TV format 20. Configured next to numerical key 41₃ for "three" is a "panoramic format" key 44 which displays a selected image on color LCD display 15 in panoramic format 21. A multiplier key 45, with which an entered number is multiplied by ten, is provided next to numerical key 41₀ for "zero." A "cancel" key 46, with which an incorrect entry can be deleted, is provided next to multiplier key 45. A "transparency" key 47, mounted next to multiplier key 45, makes it possible to switch the display over from a negative film to a transparency film. Mounted on the right-hand edge of keyboard 40 is a "slide show" key 48 which switches over to assembly of a slide show. Here the user can define the sequence, time interval, and format with which the images of film 6 are to be displayed on color LCD display 15. Provided directly below "slide show" key 48 is a "print confirmation" key 49, with which the number of prints entered is confirmed. After actuation of "print confirmation" key 49, a corresponding datum is written via write/erase head 10 onto the magnetic coating of film 6.

A first and a second arrow key 50 and 51 are provided on the right-hand edge of keyboard 40 below "print confirmation" key 49. Depending on the mode in which the apparatus is being operated at the time, actuation of first arrow key 50 in the print and viewing mode causes transport forward by one image. In the same mode, second arrow key 51 causes transport backward by one image. If the apparatus is in the slide-show mode, however, arrow keys 50 and 51 can be used only to scroll forward or backward through the images programmed for the slide show.

A "lock" key 52, to lock in a programmed slide show, is provided on the lefthand edge of keyboard 40 below numerical key 41₀ for "zero." Located below "lock" key 52 is a "program" key 53 with which, for example, a slide show is prepared by entering the desired negative number via numerical keys 41₀, 41₁, 41₂,..., 41₉. An entry must be confirmed by means of an "enter" key 54. A "show" key 55 is provided in order to retrieve a programmed slide show. The user can delete a programmed slide show using a "clear" key 56. A "load/unload" key 57 is provided in order to transport film 6 out of a film cassette 3 that has just been inserted, or transport film 6 back out of takeup cylinder 5 into film cassette 3.

The invention has been described with reference to a preferred embodiment, but of course modifications can be made in the context of the technical abilities of a person skilled in the art without thereby departing from the scope of the claims below.

## Claims

1. Apparatus for displaying images located on an exposed photographic film (6) on a viewing unit (15), the apparatus comprising:
- a keypad (40) for operating the apparatus and selecting the functions stored in the apparatus;
- a receiving means for a film cassette (3) in which the exposed film (6) containing the images is wound;
- a transport means (7, 7a, 11) for moving the film (6) from the film cassette (3)to a takeup cylinder (5);
- an illumination unit (4), a deflection mirror (12), and an optical lens (8) for forming an image on a CCD sensor (9), as well as
- circuit means (24, 25) for controlling the operation of the apparatus, and storage means (23) for storing scanned CCD sensor images or for storing user inputs via the keypad (40),
**characterized in that**, the apparatus is configured, together with the viewing unit (15), upon which the scanned images are displayed, as a movable, portable apparatus that is independent of an external energy supply, and that the viewing unit (15) is a color LCD display which is integrated into the apparatus and can be pivoted about a bearing (16) from an operating position into an inactive position.

2. Apparatus as defined in Claim 1, **characterized in that** the color LCD display (15) is pivotably mounted to a pivot arm that can pivot about the bearing (16) in such a way that the color LCD display (15) can be rotated through 90 degrees to display images in the oblong format.

3. Apparatus as defined in one of Claims 1 or 2, **characterized in that** a magnetic write/erase head (10), which is arranged with respect to the film (6) such that it can write data onto a magnetic track of the film (6) or erase it therefrom, is provided in the transport path of the film (6) between the film cassette (3) and the takeup cylinder (5).

4. Apparatus as defined in Claim 3, **characterized in that** the data written onto the magnetic track of the film (6) concern the number of repeat orders or subsequent format changes, so that the format changes in an image taken by a camera can be made subsequently.

5. Apparatus as defined in Claim 1, **characterized in that** the apparatus comprises a housing part (1) that is joined to a cover part (2) in such a way that the inserted film cassette (3), the transport means (7, 7a, 11), the illumination device (4), the takeup cylinder (5), the control and storage unit (23, 24, 25), the CCD sensor (9), the imaging optical system (8), the deflection mirror (12), the magnetic write/erase head (10), and a battery unit (30) constituting the energy source, are housed in the cavity formed by the housing part (1) and the cover part (2).

6. Apparatus as defined in Claim 5, **characterized in that** a support (2a) for the bearing (16) for pivoting the color LCD display (15) is moulded on the cover part (2).

7. Apparatus as defined in Claims 1 and 5, **characterized in that** the color LCD display (15) is mounted in an LCD housing (14); and that in the inactive position, the color LCD display (15) rests flat on the cover part (2).

## Patentansprüche

1. Vorrichtung zur Darstellung von auf einem belichteten fotografischen Film (6) befindlichen Bildern auf einer Betrachtungseinheit (15), mit
- einer Tastatur (40) zur Bedienung der Vorrichtung und Auswählen der in der Vorrichtung gespeicherten Funktionen,
- einem Aufnahmemittel für eine Filmkassette (3), in der der die Bilder enthaltende belichtete Film (6) aufgespult ist,
- einem Transportmittel (7, 7a, 11) zum Bewegen des Films (6) von der Filmkassette (3) zu einem Aufnahmezylinder (5),
- einer Beleuchtungseinheit (4), einem Umlenkspiegel (12) und einer optischen Linse (8) zum Abbilden eines Bildes auf einen CCD-Sensor (9), sowie
- Schaltungsmitteln (24, 25) zur Steuerung der Betriebsfunktion der Vorrichtung und Speichermitteln (23) zum Speichern der gescannten Bilder des CCD-Sensors oder der Benutzereingaben über die Tastatur (40),
**dadurch gekennzeichnet, dass** die Vorrichtung zusammen mit der Betrachtungseinheit (15), auf der die gescannten Bilder dargestellt sind, als mobile, tragbare und von einer externen Energieversorgung unabhängige Vorrichtung ausgebildet ist, und dass die Betrachtungseinheit (15) ein LCD-Farbdisplay ist, das in der Vorrichtung integriert und um ein Lager (16) von einer Betriebsstellung in eine Ruhestellung schwenkbar ist.

2. Vorrichtung nach Anspruch 1, **dadurch gekennzeichnet, dass** das LCD-Farbdisplay (15) mit einem um das Lager (16) schwenkbaren Schwenkarm derart drehbar verbunden ist, dass das LCD- Farbdisplay (15) für die Darstellung von Bildern im Hochformat um 90° drehbar ist.

3. Vorrichtung nach einem der Ansprüche 1 oder 2, **dadurch gekennzeichnet, dass** im Transportweg des Films (6) zwischen der Filmkassette (3) und dem Aufnahmezylinder (5) ein magnetischer Schreib-/Löschkopf (10) vorgesehen ist, der derart bezüglich des Films (6) angeordnet ist, dass er Daten auf eine magnetische Spur des Films (6) schreibt oder von dort löscht.

4. Vorrichtung nach Anspruch 3, **dadurch gekennzeichnet, dass** die auf die magnetische Spur des Films (6) geschriebenen Daten die Anzahl der Nachbestellungen oder nachträgliche Formatänderungen betreffen, so dass die Formatänderungen des mit einer Kamera aufgenommenen Bildes nachträglich vomehmbar sind.

5. Vorrichtung nach Anspruch 1, **dadurch gekennzeichnet, dass** die Vorrichtung aus einem Gehäuseteil (1) besteht, das mit einem Abdeckteil (2) derart verbunden ist, dass in dem durch das Gehäuseteil (1) und das Abdeckteil (2) gebildeten Hohlraum die eingelegte Filmkassette (3), das Transportmittel (7, 7a, 11), die Beleuchtungseinrichtung (4), der Aufnahmezylinder (5), die Steuer- und Speichereinheit (23, 24, 25), der CCD-Sensor (9), die Abbildungsoptik (8), der Umlenkspiegel (12); der magnetische Schreib-/Löschkopf (10) und eine Batterieeinheit (30) als Energieversorgung untergebracht sind.

6. Vorrichtung nach Anspruch 5, **dadurch gekennzeichnet, dass** auf dem Abdeckteil (2) eine Halterung (2a) für das Lager (16) zum Schwenken des LCD-Farbdisplays (15) ausgeformt ist.

7. Vorrichtung nach Anspruch 1 und 5, **dadurch gekennzeichnet, dass** das LCD-Farbdisplay (15) in einem LCD-Gehäuse (14) befestigt ist, und dass das LCD-Farbdisplay (15) in der Ruhestellung flach auf dem Abdeckteil (2) aufliegt.

## Revendications

1. Dispositif destiné à afficher des images situées sur un film photographique exposé (6) sur une unité de visualisation (15), le dispositif comprenant :
- un pavé numérique (40) destiné à mettre en oeuvre le dispositif et à sélectionner les fonctions mémorisées dans le dispositif,
- un moyen de réception pour une cassette de film (3) dans laquelle le film exposé (6) contenant les images est enroulé,
- un moyen de transport (7, 7a, 11) destiné à déplacer le film (6) depuis la cassette de film (3) vers un cylindre récepteur (5),
- une unité d'illumination (4), un miroir de déviation (12) et une lentille optique (8) destinés à former une image sur un capteur à dispositif à transfert de charges (CCD) (9), de même que
- un moyen de circuit (24, 25) destiné à commander le fonctionnement du dispositif, et un moyen de mémorisation (23) destiné à mémoriser des images numérisées du capteur à dispositif CCD ou bien destiné à mémoriser des entrées d'utilisateur par l'intermédiaire du pavé numérique (40),
**caractérisé en ce que**, le dispositif est configuré, ainsi que l'unité de visualisation (15), sur laquelle les images numérisées sont affichées, en tant que dispositif mobile et portable qui est indépendant d'une alimentation en énergie externe, et **en ce que** l'unité de visualisation (15) est un dispositif d'affichage à cristaux liquides (LCD) en couleur qui est intégré dans le dispositif et peut être pivoté autour d'un palier (16) depuis une position de fonctionnement jusque dans une position inactive.

2. Dispositif selon la revendication 1, **caractérisé en ce que** le dispositif d'affichage à cristaux liquides (LCD) en couleur (15) est monté avec possibilité de pivotement sur un bras de pivot qui peut pivoter autour du palier (16), de telle manière que le dispositif d'affichage à cristaux liquides (LCD) en couleur (15) peut être entraîné en rotation de 90 degrés afin d'afficher des images suivant un format oblong.

3. Dispositif selon l'une des revendications 1 ou 2, **caractérisé en ce qu'**une tête d'écriture/effacement magnétique (10), qui est agencée par rapport au film (6), de sorte qu'elle peut écrire des données sur une piste magnétique du film (6) ou les effacer de celle-ci, est prévue dans le trajet de transport du film (6) entre la cassette de film (3) et le cylindre récepteur (5).

4. Dispositif selon la revendication 3, **caractérisé en ce que** les données écrites sur la piste magnétique du film (6) concernent le nombre d'instructions de répétition ou des changements de formats ultérieurs, de sorte que les changements de formats dans une image prise par un dispositif de prise de vues peuvent être réalisés ultérieurement.

5. Dispositif selon la revendication 1, **caractérisé en ce que** le dispositif comprend une partie de boîtier (1) qui est reliée à une partie de protection (2) de telle façon que la cassette de film insérée (3), le moyen de transport (7, 7a, 11), le dispositif d'illumination (4), le cylindre récepteur (5), l'unité de commande et de mémorisation (23, 24, 25), le capteur à dispositif CCD (9), le système optique de formation d'image (8), le miroir de déviation (12), la tête d'écriture/d'effacement magnétique (10), et une unité de batterie (30) constituant la source d'énergie, sont logés dans la cavité formée par la partie de boîtier (1) et la partie de protection (2).

6. Dispositif selon la revendication 5, **caractérisé en ce qu'**un support (2a) destiné au palier (16) destiné à faire pivoter le dispositif d'affichage à cristaux liquides (LCD) en couleur (15) est moulé sur la partie de protection (2).

7. Dispositif selon les revendications 1 et 5, **caractérisé en ce que** le dispositif d'affichage à cristaux liquides en couleur (15) est monté dans un logement de dispositif d'affichage à cristaux liquides (LCD) 14, et **en ce que** dans la position inactive, le dispositif d'affichage à cristaux liquides (LCD) en couleur (15) repose à plat sur la partie de protection (2).
